**Europäisches Patentamt**

**European Patent Office**

**Office européen des brevets**

(11) Numéro de publication: **0 428 427 B1**

# FASCICULE DE BREVET EUROPEEN

(45) Date de publication du fascicule du brevet: **06.09.95**

(51) Int. Cl.⁶: **C08J 3/12**, B29B 9/08, //C08L5/00

(21) Numéro de dépôt: **90403062.4**

(22) Date de dépôt: **30.10.90**

---

(54) **Procédé de granulation de polysaccharides.**

---

(30) Priorité: **30.10.89 FR 8914229**

(43) Date de publication de la demande:
**22.05.91 Bulletin 91/21**

(45) Mention de la délivrance du brevet:
**06.09.95 Bulletin 95/36**

(84) Etats contractants désignés:
**DE DK GB NL**

(56) Documents cités:
**DE-A- 1 813 541**
**US-A- 1 771 139**
**US-A- 2 347 464**
**US-A- 3 832 472**

(73) Titulaire: **SYSTEMS BIO-INDUSTRIES**
**4 place des Ailes**
**F-92100 Boulogne (FR)**

(72) Inventeur: **Huet, Yves**
**36, rue des Ormes**
**F-50500 Carentan (FR)**
Inventeur: **Mazoyer, Jacques**
**3, cité Auby**
**F-50500 Carentan (FR)**

(74) Mandataire: **Gillard, Marie-Louise et al**
**Cabinet Beau de Loménie**
**158, rue de l'Université**
**F-75340 Paris Cédex 07 (FR)**

## Description

La présente invention concerne un nouveau procédé de granulation des polysaccharides extraits des végétaux ou secrétés par des micro-organismes, choisis parmi le xanthane, le carraghénane, le galactomannane, l'alginate, la pectine, la gomme arabique, la maltodextrine et le scléroglucane. Ces polysaccharides sont utilisés couramment dans les industries alimentaire, cosmétique et pharmaceutique, mais aussi dans l'industrie pétrolière ou textile; ils sont aussi introduits dans les peintures, les adhésifs, les encres, les ciments, les bitumes et autres.

On les trouve sur le marché purs ou en mélange y compris avec d'autres additifs sous forme de poudres amorphes ou encore de granulés, d'une bonne dispersibilité et mouillabilité en milieu aqueux et plus faciles à manipuler étant donné leur facilité d'écoulement ainsi que l'absence de poussières à la manutention.

La granulation de ces polysaccharides est généralement réalisée par voie humide : sur la poudre agitée dans un granulateur conventionnel, on pulvérise de l'eau peu à peu par nébulisation ; les particules se collent entre elles, formant des granules qui devront ensuite être séchées et tamisées pour éliminer les particules fines et parfois des granulés trop gros.

Les polysaccharides sont des composés hygroscopiques et ce procédé, simple en apparence, est peu satisfaisant ; l'opération est longue car l'eau doit être apportée très lentement pour éviter la formation de mottes ou une prise en masse et le matériel s'encroûte facilement. Les granulés formés ont une surface "vitrifiée" après séchage, ce qui ralentit leur solubilisation aqueuse.

Pour éviter le mottage, on a proposé d'introduire un mélange d'eau et d'un solvant alcoolique, tel que le méthanol, l'éthanol ou l'isopropanol dans des proportions variables ; ce procédé présente, quoique à un degré moindre, les désavantages du procédé à l'eau.

Le procédé selon l'invention ne présente pas ces inconvénients ; il permet d'obtenir rapidement des granulés de taille régulière, s'écoulant bien, faciles à disperser et à solubiliser en milieu aqueux.

Selon l'invention, la poudre composée d'un polysaccharide pur, d'un mélange de polysaccharides ou d'une composition à base de polysaccharide, par exemple une composition aromatique dans laquelle le polysaccharide sert de support ou d'agent de suspension, est mise dans l'un des appareils utilisés couramment pour la granulation par voie humide, avec de la glace en morceaux, en paillettes ou pilée ; les granulés formés en quelques minutes d'agitation sont ensuite séchés, oar exemple en étuve ventilée ou en lit d'air fluidisé, jusqu'à obtenir une humidité résiduelle convenable, généralement inférieure à 20%, comme pour les granulés préparés selon les procédés classiques. L'agitation du mélange qui permet la granulation pourra être démarrée avant l'introduction de la glace, pendant son introduction ou encore après, notamment lorsque l'appareil ne peut être agité que fermé.

Les appareils utilisés peuvent être entre autres des mélangeurs rapides tels que ceux commercialisés par STEPHAN (Lognes - Torcy - 77 - FR), par LÖDIGE (Paderborn - RFA) ou par MORITZ (Chatou - 78 - FR), ou des appareils à calotte et batteur planétaire, tels que ceux commercialisés par GUEDU (Semur en Auxois - 21 - FR) ou encore des appareils à cuve mobile, ou même des mélangeurs granulateurs qui travaillent plus lentement.

La glace peut être préparée avec l'eau distillée ou l'eau courante suivant l'utilisation à laquelle les granulés sont destinés ; pour certaines applications, on peut introduire dans l'eau avant sa transformation en glace l'un des additifs couramment utilisés pour améliorer les qualités physiques du polysaccharide, comme un agent tensioactif, un agent dispersant tel que la cellulose microcristalline, un sel minéral tel qu'un chlorure alcalin, un phosphate, un sucre tel que le saccharose, le lactose ou le dextrose, ou encore un dialdéhyde réticulant de surface tel que le glyoxal. La glace utilisée se trouve à une température comprise entre 0°C et -25°C et de préférence entre -10°C et -20°C. On introduit, en général, de 0,1 à 1 partie en poids de glace pour une partie de polysaccharide en poudre, notamment de 0,15 à 0,6 partie en poids de glace, et de préférence 0,3 à 0,6 partie en poids de glace, notamment selon l'humidité initiale de la poudre.

On sait que les conditions et les résultats de la granulation dépendent du type d'appareil utilisé, mais dans tous les cas le procédé de l'invention sera plus rapide que le procédé conventionnel, l'appareillage restera propre et l'additif éventuel sera réparti de façon homogène sur le granulé.

Dans ce qui suit, on décrit divers exemples de mise en oeuvre du procédé de l'invention, ainsi que les caractéristiques de granulés obtenus et celles de granulés préparés avec de l'eau à température ordinaire.

La dispersibilité des polysaccharides a été appréciée en utilisant la méthode suivante :

on introduit 100 g d'eau à 19°±1°C dans un bécher de 250 ml comportant un agitateur (barreau magnétique) ; on disperse sur la surface de l'eau 1 g de granulés puis on met immédiatement l'agitateur magnétique en rotation (600 tours/minute). La dispersibilité est appréciée visuellement après 1 minute ; s'il

2

EP 0 428 427 B1

n'y a pas de grumeaux, elle est considérée excellente ; sinon, l'agitation est poursuivie pendant 2 minutes ; s'il n'y a plus de grumeaux, la dispersibilité est déclarée bonne ; sinon, elle est médiocre.

La vitesse de solubilisation a été estimée en mesurant au viscosimètre Brookfields LVT (30 tours/minute - aiguille n° 2) la viscosité d'une dispersion de 1,25 g de granulés dans 250 g d'eau distillée contenant 5 grammes/litre de NaCl, après 3 minutes et 10 minutes d'agitation de la dispersion dans un agitateur IKA tournant à 600 tours/minute.

La coulabilité est le temps d'écoulement de 100 g de granulés à travers un entonnoir Pyrex normalisé, tandis que la densité apparente du produit non tassé est déterminée après introduction du produit en chute libre dans une éprouvette et que la densité du produit tassé est déterminée après avoir secoué l'éprouvette jusqu'à volume constant.

Exemple 1

On introduit dans un mélangeur granulateur rapide de 10 litres Stephan référence 4 m12, 1 kg de xanthane et 400 g de glace à -18°C en cubes de 1,5 cm de côté, préparée avec de l'eau distillée ou de l'eau de ville. Après 4 minutes d'agitation à grande vitesse, la granulation est terminée et les granulés sont séchés en étuve ventillée à 50°C jusqu'à obtention de l'humidité résiduelle choisie en fonction de l'utilisation ultérieure du produit, de 5% à 14%.

Exemples 2 et 3

On applique le même procédé qu'à l'exemple 1, mais avec respectivement 350 g ou 240 g de glace.

Exemple 4

On applique le procédé de l'exemple 1 à la granulation de 1 kg de guar, avec 400 g de glace.

Exemples 5 et 6

Le procédé de l'exemple 1 est mis en oeuvre avec 1 kg de guar et 400 g de glaçons contenant 6 ml de glyoxal à 30%, ou 400 g de glace contenant 50 g de KCl.

Exemple 7

Le procédé de l'exemple 1 est mis en oeuvre avec 1 kg de pectine HM (hautement méthylée) et 400 g de glace.

Exemple 8

On introduit dans un appareil LÖDIGE référence FM 300 DIZ, de 300 litres, 35 kg de xanthane, 14 kg de glace pilée et on agite pendant 3 minutes. Les granulés formés sont ensuite séchés en étuve ventilée.

Essai témoin

Dans l'appareil STEPHAN de 10 litres on introduit 1 kg de la poudre de xanthane mise en oeuvre à l'exemple 1. 400 ml d'eau distillée sont pulvérisés par aspiration sous vide dans l'appareil agité ; 15 minutes sont nécessaires. Les granulés sont ensuite séchés en étuve ventilée à 50°C.

Les résultats des mesures effectuées sur les granulés ainsi préparés, ainsi que sur la poudre de départ, figurent dans les tableaux I et II ; dans les exemples 1(a) et (b), des poudres de xanthane commerciales de qualité différente ont été granulées.

TABLEAU I

| | Essai témoin | Exemple 1 (a) | Exemple 1 (b) |
|---|---|---|---|
| . Humidité résiduelle .......... | 9,5% | 13,4% | 14% |
| . Répartition granulométrique | | | |
| - >   900 μ ................. | 77,4% | 22% | 0,2% |
| - >   500 μ ................. | 19,3% | 33% | 19,3% |
| - >   250 μ ................. | 3% | 30% | 34,3% |
| - >   100 μ ................. | 0 | 12% | 41,9% |
| - <   100 μ ................. | 0,3% | 3% | 4,3% |
| . Dispersibilité ............... | Bonne | Bonne | Bonne |
| . Mouillabilité ................ | Bonne | Bonne | Bonne |
| . Coulabilité .................. | Mauvaise | 13 s | 13 s |
| . Densité apparente : | | | |
| - produit non tassé .......... | 0,58% | 0,47% | 0,37% |
| - produit tassé .............. | 0,59% | 0,52% | 0,41% |
| . Vitesse de solubilisation ..... | 3 min : 0,03% 10 min : 5,2% | 3 min : 15% 10 min : 60% | 3 min : 26% 10 min : 83% |
| . Hors poussière ............... | Oui | Oui | Oui |

EP 0 428 427 B1

Tableau II

| | Guar poudre de départ | Exemple 4 | Exemple 5 | Exemple 6 | Pectine poudre de départ | Exemple 7 |
|---|---|---|---|---|---|---|
| • Humidité ................. | 10% | 12% | 13,5% | 11% | 11% | 13,2% |
| • Répartition granulométrique | | | | | | |
| – > 900 µ ............... | | 0 | 1,3% | 0 | 0 | 0 |
| – > 500 µ ............... | | 7% | 6,5% | 0,2% | 0 | 22,8% |
| – > 250 µ ............... | | 38% | 37% | 13% | 0 | 42,8% |
| – > 100 µ ............... | | 46% | 44% | 60% | 51,8% | 32,2% |
| – < 100 µ ............... | 100% < 80 µ | 9% | 11,2% | 26,8% | 48,2% | 2,2% |
| • Dispersibilité ......... | Mauvaise | Bonne | Bonne | Bonne | Mauvaise | Bonne |
| • Mouillabilité .......... | Nulle. Amas en surface | Bonne | Bonne | Bonne | Mauvaise | Bonne |
| • Coulabilité ............ | Nulle | 5s:bonne | 5s:bonne | Bonne | Partielle | 11s:Bonne |
| • Densité apparente g/cm³ : | | | | | | |
| – produit non tassé ..... | 0,58% | 0,501 | 0,493 | 0,76 | 0,596 | 0,470 |
| • Volume apparent g/cm³ ...... | 1,75 | 2 | 2,02 | 1,32 | 1,68 | 2,12 |
| • Hors poussière ......... | Non | Oui | Oui | Oui | Non | Oui |

Exemple 9

On effectue une granulation dans un mélangeur avec 100 g de poudre composée en poids de 17% d'huile essentielle d'orange, de 78% de gomme arabique et 5% d'eau, et de 10 g de glace broyée.

Après 15 heures de séchage à température ambiante, les granulés très fins, inférieurs à 0,6 mm, comportent 10,2% d'humidité et leur solubilité est améliorée par rapport à celle de la poudre de départ.

Avec 15 g de glace, les granulés obtenus sont moins fins, quoique inférieurs à 1 mm, mais de bonne qualité.

Exemple 10

On effectue une granulation de 100 g de poudre, composée de 74 g de maltodextrine, 4 g de gomme arabique, 15 g d'huile essentielle de citron et 7 g d'eau, avec 10 g de glace pilée.

On obtient après séchage un produit granulé qui passe sur tamis de 1 mm. Par contre, avec 15 g de glace pour 100 g les granulés sont collants.

**Revendications**

1. Procédé de granulation par voie humide de polysaccharides choisis parmi le xanthane, le carraghénane, le galactomannane, l'alginate, la pectine, la gomme arabique, la maltodextrine et le scléroglucane, caractérisé en ce que l'eau de granulation est introduite sous forme de glace en morceaux, en paillettes ou pilée.

2. Procédé selon la revendication 1, caractérisé en ce que la glace contient un additif.

3. Procédé selon la revendication 2, caractérisé en ce que l'additif est choisi parmi les agents tensioactifs et dispersants, les sels minéraux, les sucres, les dialdéhydes.

4. Procédé selon l'une quelconque des revendications 1 à 3, caractérisé en ce que la glace est à une température comprise entre -10°C et -20°C.

5. Procédé selon l'une quelconque des revendications 1 à 4, caractérisé en ce qu'on introduit 0,1 à 1 partie en poids de glace pour 1 partie de polysaccharide.

6. Procédé selon l'une quelconque des revendications 1 à 5, caractérisé en ce qu'on introduit de 0,15 à 0,6 partie en poids de glace pour 1 partie de polysaccharide.

7. Procédé selon l'une quelconque des revendications 1 à 5, caractérisé en ce qu'on introduit de 0,3 à 0,6 partie en poids de glace pour 1 partie de polysaccharide.

**Claims**

1. Process for the wet granulation of polysaccharides chosen from xanthan, carrageenan, galactomannan, alginate, pectin, gum arabic, maltodextrin and scleroglucan, characterized in that the water for granulation is introduced in the form of ice pieces, ice flakes or crushed ice.

2. Process according to Claim 1, characterized in that the ice contains an additive.

3. Process according to Claim 2, characterized in that the additive is chosen from surfactants and dispersants, inorganic salts, sugars and dialdehydes.

4. Process according to any one of Claims 1 to 3, characterized in that the ice is at a temperature of between -10°C and -20°C.

5. Process according to any one of Claims 1 to 4, characterized in that 0.1 to 1 part by weight of ice is introduced per 1 part of polysaccharide.

6. Process according to any one of Claims 1 to 5, characterized in that 0.15 to 0.6 part by weight of ice is introduced per 1 part of polysaccharide.

7. Process according to any one of Claims 1 to 5, characterized in that 0.3 to 0.6 part by weight of ice is introduced per 1 part of polysaccharide.

**Patentansprüche**

1. Verfahren zur Feuchtgranulierung von Polysacchariden, die unter Xanthan, Carrageenan, Galactomannanen, Alginaten, Pektinen, Gummi arabicum, Maltodextrinen und Skleroglucanen ausgewählt sind, dadurch gekennzeichnet, daß das Granulierwasser in Form von Eisstücken, Eiskörnern oder zerstoßenem Eis zugeführt wird.

2. Verfahren nach Anspruch 1, dadurch gekennzeichnet, daß das Eis ein Additiv enthält.

3. Verfahren nach Anspruch 2, dadurch gekennzeichnet, daß das Additiv unter oberflächenaktiven Mitteln und Dispergiermitteln, anorganischen Salzen, Zuckern und Dialdehyden ausgewählt ist.

4. Verfahren nach einem der Ansprüche 1 bis 3, dadurch gekennzeichnet, daß das Eis eine Temperatur von -10 bis -20 °C aufweist.

5. Verfahren nach einem der Ansprüche 1 bis 4, dadurch gekennzeichnet, daß 0,1 bis 1 Gewichtsteile Eis pro Gewichtsteil Polysaccharid zugeführt werden.

6. Verfahren nach einem der Ansprüche 1 bis 5, dadurch gekennzeichnet, daß 0,15 bis 0,6 Gewichtsteile Eis pro Gewichtsteil Polysaccharid zugeführt werden.

7. Verfahren nach einem der Ansprüche 1 bis 5, dadurch gekennzeichnet, daß 0,3 bis 0,6 Gewichtsteile Eis pro Gewichtsteil Polysaccharid zugeführt werden.